# EUROPEAN PATENT SPECIFICATION

(11) **EP 4 521 363 B1**
(45) Date of publication and mention of the grant of the patent: **09.12.2026**
(21) Application number: 24192497.6
(22) Date of filing: 02.08.2024
(51) Int. Cl.: G06V 20/62, G06V 30/10, G06V 30/19, G06V 30/146, G06V 30/148

(54) **METHOD AND SYSTEM FOR IDENTIFYING PRODUCT DETAILS FROM MARKETING COLLATERAL IMAGES**
VERFAHREN UND SYSTEM ZUR IDENTIFIZIERUNG VON PRODUKTDETAILS AUS MARKETING-KOLLATERALBILDERN
PROCEDE ET SYSTEME D'IDENTIFICATION DE DETAILS DE PRODUITS A PARTIR D'IMAGES COLLATÉRALES DE COMMERCIALISATION

(30) Priority: 07.09.2023 IN 202321060137
(43) Date of publication of application: 12.03.2025
(73) Proprietor: Tata Consultancy Services Limited, Maharashtra (IN)
(72) Inventor: AGRAWAL, AMIT KUMAR, 700160 Kolkata (IN); PATEL, DEVANG JAGDISHCHANDRA, 400096 Mumbai (IN); AGRAWAL, GUNJAN, 560066 Bangalore (IN); JAIN, PUSHP KUMAR, 411057 Pune (IN); MONDAL, PROSENJIT, 700160 Kolkata (IN); GUPTA, MANTU PRASAD, 500081 Hyderabad (IN)
(74) Representative: Goddar, Heinz J.

(56) References cited:
- US-A1- 20230 005 286
- US-B1- 9 697 234

## Description

### CROSS-REFERENCE TO RELATED APPLICATIONS AND PRIORITY

The present application claims priority to Indian application no. 202321060137 filed on September 7, 2023.

### TECHNICAL FIELD

The disclosure herein generally relates to the field of image processing and, more particularly, to a method and system for identifying product details from marketing collateral images.

### BACKGROUND

Retailers need complete information about their competitor's pricing and promotions to make sure that they are competitive enough to attract the customers. Marketing collaterals like product flyers and brochures are one of the most vital sources of this information. The identification of product names and their associated details from marketing collaterals is of paramount importance due to the comprehensive information they provide. This includes crucial aspects such as the brand name, specific product name, quantity, and other pertinent details related to the product.

Conventional approaches depend on large volume of data repositories which consists of grammatical words, common English words, different sets of keywords like category keywords, brand names, brand-specific product names which needs to be manually prepared or hand crafted. Further, most of the prior arts are based on conditional random field models, Support Vector Machine (SVM), etc. which requires large volume of feature specific training data along with metadata, performance of the model depends on quality and quantity of the training data. Few conventional approaches utilize Name Entity Recognition (NER) methods which requires large amount of annotated training data, and some other conventional approaches utilize different sorts of computation like word2vec, Term Frequency-Inverse Document Frequency (TF-IDF), etc. which requires a large corpus of targeted data for optimal performance. Another set of conventional approaches are template based and assume that product name follows certain grammatical patterns. Thus, the conventional approaches have the above mentioned limitations that need to be addressed for obtaining product details from marketing collateral in an efficient manner.

Some examples are:
US 2023/005286 A1 which discloses a method decoding purchase data from receipt images, it extracts product names and/or details from document images and builds a product dictionary; and,
US 9 697 234 B1 describing a method associating terms (like brand names) with image regions.

### SUMMARY

Embodiments of the present disclosure (set up in the appended claims) present technological improvements as solutions to one or more of the above-mentioned technical problems recognized by the inventors in conventional systems. For example, a method for identifying product details from marketing collateral images is provided. The method includes receiving, by one or more hardware processors, an image and a plurality of seed words associated with a marketing collateral. Further, the method includes identifying a plurality of word level text regions from the image using a text region detection technique. Furthermore, the method includes extracting a text value corresponding to each of the plurality of word level text regions using a text extraction technique. Furthermore, the method includes extracting a plurality of text characteristics corresponding to each of the plurality of word level text regions using a text characteristics extraction technique. Furthermore, the method includes obtaining a plurality of matching seed word regions based on a comparison between the plurality of seed words and a plurality of text values corresponding to each of the plurality of word level text regions based on a Levenshtein distance based matching technique. Furthermore, the method includes identifying a plurality of meaningful text blocks by merging a plurality of adjacent word level text regions. Furthermore, the method includes identifying a plurality of seed blocks by finding a merged word level text region overlapping with each of a corresponding plurality of matching seed word region. Finally, the method includes identifying a plurality of product names based on the plurality of meaningful text blocks, the plurality of seed blocks and a plurality of seed parameters associated with the plurality of seed words using a matrix based product name detection technique, wherein the plurality of product names are updated in the product dictionary.

In another aspect, a system for identifying product details from marketing collateral images is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an image and a plurality of seed words associated with a marketing collateral. Further, the one or more hardware processors are configured by the programmed instructions to identify a plurality of word level text regions from the image using a text region detection technique. Furthermore, the one or more hardware processors are configured by the programmed instructions to extract a text value corresponding to each of the plurality of word level text regions using a text extraction technique. Furthermore, the one or more hardware processors are configured by the programmed instructions to extract a plurality of text characteristics corresponding to each of the plurality of word level text regions using a text characteristics extraction technique. Furthermore, the one or more hardware processors are configured by the programmed instructions to obtain a plurality of matching seed word regions based on a comparison between the plurality of seed words and a plurality of text values corresponding to each of the plurality of word level text regions based on a Levenshtein distance based matching technique. Furthermore, the one or more hardware processors are configured by the programmed instructions to identify a plurality of meaningful text blocks by merging a plurality of adjacent word level text regions. Furthermore, the one or more hardware processors are configured by the programmed instructions to identify a plurality of seed blocks by finding a merged word level text region overlapping with each of a corresponding plurality of matching seed word region. Finally, the one or more hardware processors are configured by the programmed instructions to identify a plurality of product names based on the plurality of meaningful text blocks, the plurality of seed blocks and a plurality of seed parameters associated with the plurality of seed words using a matrix based product name detection technique, wherein the plurality of product names are updated in the product dictionary.

In yet another aspect, a computer program product including a non-transitory computer-readable medium having embodied therein a computer program for identifying product details from marketing collateral images is provided. The computer readable program, when executed on a computing device, causes the computing device to receive an image and a plurality of seed words associated with a marketing collateral. Further, computer readable program, when executed on a computing device, causes the computing device to identify a plurality of word level text regions from the image using a text region detection technique. Furthermore, the computer readable program, when executed on a computing device, causes the computing device to extract a text value corresponding to each of the plurality of word level text regions using a text extraction technique. Furthermore, the computer readable program, when executed on a computing device, causes the computing device to extract a plurality of text characteristics corresponding to each of the plurality of word level text regions using a text characteristics extraction technique. Furthermore, the computer readable program, when executed on a computing device, causes the computing device to obtain a plurality of matching seed word regions based on a comparison between the plurality of seed words and a plurality of text values corresponding to each of the plurality of word level text regions based on a Levenshtein distance based matching technique. Furthermore, the computer readable program, when executed on a computing device, causes the computing device to identify a plurality of meaningful text blocks by merging a plurality of adjacent word level text regions. Furthermore, the computer readable program, when executed on a computing device, causes the computing device to identify a plurality of seed blocks by finding a merged word level text region overlapping with each of a corresponding plurality of matching seed word region. Finally, the computer readable program, when executed on a computing device, causes the computing device to identify a plurality of product names based on the plurality of meaningful text blocks, the plurality of seed blocks and a plurality of seed parameters associated with the plurality of seed words using a matrix based product name detection technique, wherein the plurality of product names are updated in the product dictionary.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system for identifying product details from marketing collateral images, in accordance with some embodiments of the present disclosure.
FIG. 2 illustrates a functional architecture of the system of FIG. 1, for identifying product details from marketing collateral images, in accordance with some embodiments of the present disclosure.
FIG. 3 is an exemplary flow diagram illustrating a processor implemented method for identifying product details from marketing collateral images implemented by the system of FIG. 1 according to some embodiments of the present disclosure.
FIG. 4 is an example marketing collateral for identifying product names according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Retailers need complete information about their competitor's pricing and promotions to make sure that they are competitive enough to attract the customers. Marketing collaterals like product flyers and brochures are one of the most vital sources of this information. The identification of product names and their associated details from marketing collaterals is of paramount importance due to the comprehensive information they provide. This includes crucial aspects such as the brand name, specific product name, quantity, and other pertinent details related to the product. Some of the conventional approaches utilizes conditional random field models, Support Vector Machine (SVM), Name Entity Recognition (NER) techniques for extraction of product details from marketing collaterals like brochures, complex retail flyer images or PDFs and the said conventional approaches require feature specific training data.

Some other conventional approaches depend on larger volume of data repositories which consists of grammatical words, common English words, different sets of keywords like category keywords, brand names, brand-specific product names which should be manually prepared or hand crafted. Most of the conventional methods are template based and requires bulk data. Also, the current state of art deep/machine learning based methods require a lot of training data (Which are costly and difficult to gather), and high-end GPU compute infrastructure.

To overcome the challenges of the conventional approaches, embodiments herein provide an image processing system, and more particularly to a system and method to identify product details and generate a product name dictionary from a complex retail flyer image. The present disclosure extracts product name blocks from marketing collaterals using image processing techniques. The inputs to the present disclosure are seed words and the marketing collateral (for example, flyers, brochures, and the like). The seed words are valid product names taken from the input flyer and its purpose is to identify other product names having similar textual characteristics. It involves various stages of image processing steps for detecting and extracting product information and creating product name training dictionary. The inputs to the present disclosure are seed words and the marketing collateral. A plurality of word level text regions from the image and text value are obtained. Further, a plurality of text characteristics corresponding to each of the plurality of word level text regions are extracted and matching seed word regions are obtained. Further a plurality of meaningful text blocks and a plurality of seed blocks are obtained. Finally, a plurality of product names are extracted using a matrix based product name detection technique and updated in the product dictionary. The product name dictionary is created with minimal effort, irrespective of its language and thus makes the method language agnostic. The method and system are generic in nature and thus can be implemented to generate product training data from any complex retail flyer images using a set of image processing techniques.

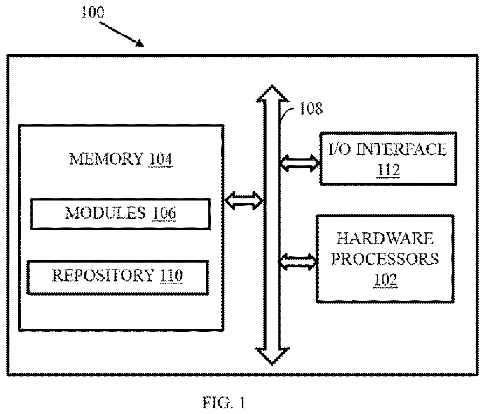

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 is a functional block diagram of a system 100 for identifying product details from marketing collateral images, in accordance with some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may further include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

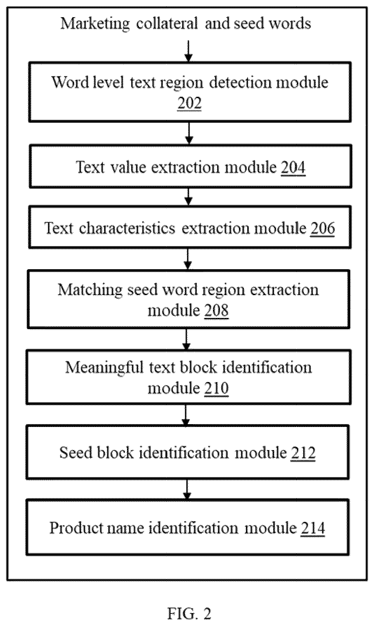

The plurality of modules 106 include programs or coded instructions that supplement applications or functions performed by the system 100 for identifying product details from marketing collateral images. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for identifying product details from marketing collateral images. In an embodiment, the plurality of modules 106 include a word level text region detection module 202 (shown in FIG. 2), a text value extraction module 204, a text characteristics extraction module 206 (shown in FIG. 2), a matching seed word region extraction module 208 (shown in FIG. 2), a meaningful text block identification module 210 (shown in FIG. 2), a seed block identification module 212 (shown in FIG. 2), a product name identification module 214 (shown in FIG. 2). In an embodiment, FIG. 2 illustrates a functional architecture of the system of FIG. 1, for identifying product details from marketing collateral images, in accordance with some embodiments of the present disclosure.

The data repository (or repository) 110 may include a plurality of abstracted piece of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

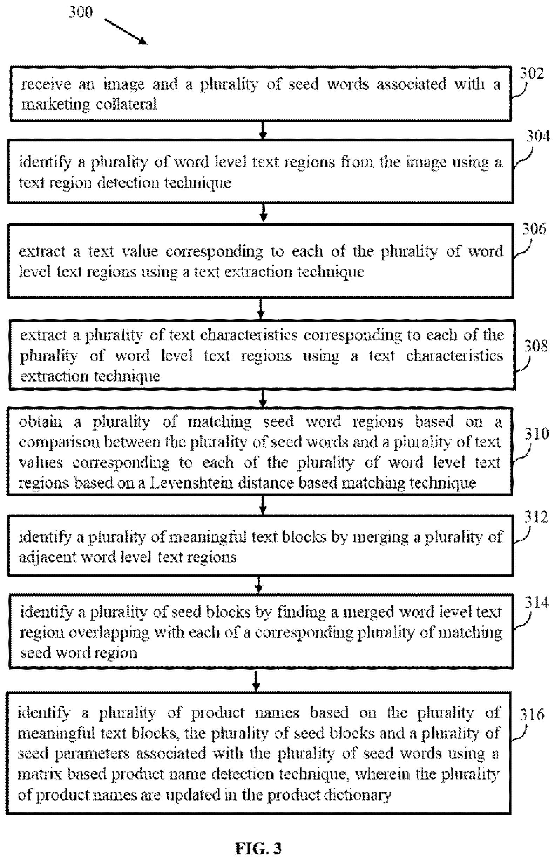

FIG. 3 is an exemplary flow diagram illustrating a method 300 for identifying product details from marketing collateral images implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 300 by the one or more hardware processors 102. The steps of the method 300 of the present disclosure will now be explained with reference to the components or blocks of the system 100 as depicted in FIG. 1 and the steps of flow diagram as depicted in FIG. 3. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

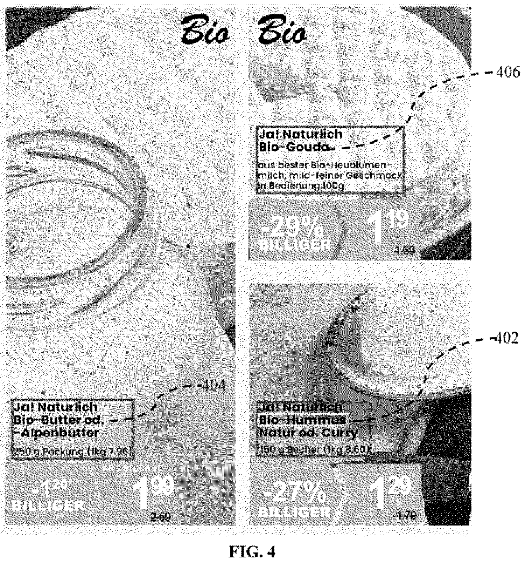

At step 302 of the method 300, the one or more hardware processors 102 are configured by the programmed instructions to receive an image and a plurality of seed words associated with a marketing collateral. For example, the marketing collateral includes a variety of formats ranging from flyers, brochures and the like. The seed words are valid product names associated with the marketing collateral used for identifying other product names. For example, considering FIG. 4, if the seed word is "Bio-Hummus^{®}" 402, then the product names are "Bio-Butter od^{®}" 404 and "Bio-Gouda^{®}" 406.

At step 304 of the method 300, the word level text region detection module 202 executed by one or more hardware processors 102 is configured by the programmed instructions to identify a plurality of word level text regions from the image using a text region detection technique. For example, the text region detection technique used in the present disclosure can be one of the state of the art text detection techniques.

At step 306 of the method 300, the text value extraction module 204 executed by the one or more hardware processors 102 is configured by the programmed instructions to extract a text value corresponding to each of the plurality of word level text regions using a text extraction technique. For example, any state of the art OCR techniques can be used for the text value extraction.

At step 308 of the method 300, the text characteristics extraction module 206 executed by the one or more hardware processors 102 is configured by the programmed instructions to extract a plurality of text characteristics corresponding to each of the plurality of word level text regions using a text characteristics extraction technique. For example, the plurality of text characteristics includes a text pixel density, a foreground text color, and a height of the text region. The text characteristics extraction technique of the present disclosure explained as follows. Initially, each of the plurality of word level text regions are converted into a two-colour converted text regions using a two-colour conversion utility function. The two-colour conversion utility function used herein is in accordance with Applicant's Indian Patent Application No. 202221029276, titled METHOD AND SYSTEM FOR DETECTING AND EXTRACTING PRICE REGION FROM DIGITAL FLYERS AND PROMOTIONS, filed on 20 May 2022. Thus, it can be understood that explanation of two-colour conversion utility function is discussed briefly herein and can be referred to above application for further details. Further, a plurality of text regions are obtained by removing white pixel noise from the two-colour converted text regions using an image processing technique. Furthermore, a white pixel mask corresponding to each of the plurality of text regions is obtained using image processing tools, wherein the text region comprises a foreground text. After obtaining white pixel mask, a dominant color value is identified for each of the plurality of text regions by converting the each of the plurality of text regions into LAB color space and masking an L component with the white pixel mask. After identifying dominant color, a text pixel density associated with each of the plurality of text regions is estimated based on the white pixel mask. The text pixel density is the quotient obtained by dividing number of white pixels by total size of the text region and, wherein the total size of the text region is equal to total number of pixels in the text region. Further, a height associated with each of the plurality of text regions is computed based on a height of the white pixel mask associated with each of the plurality of text regions, wherein the height associated with each of the plurality of text regions corresponds to the maximum height of the foreground text. Finally, the plurality of text characteristics corresponding to each of the plurality of word level text regions are obtained by generating a tuple comprising the text pixel density, the foreground text color, and the height of the text region. An example text characteristic tuple for the product name "Bio-Gouda^{®}" shown in FIG. 4 is (0.45, 7, 47).

In an embodiment, the text characteristic comparison utility used in the present disclosure analyzes the text characteristics of two word level text regions, taking into account a tolerance level referred to as TUPLE_THRESHOLD. The TUPLE_THRESHOLD includes threshold values for comparing the text pixel density, the foreground text color, and the height of the text region. Through experimentation, it was determined that the optimal TUPLE_THRESHOLD values are (0.10, 5, 10). An example pseudocode 1 for text characteristic comparison is given below:

### Pseudocode 1:

```
  i. Let T1 and T2 be two text characteristics tuple corresponding to text regions.
  ii. IF |T1.text_density - T2.text_density| <= TUPLE_THRESHOLD.text_density
       AND |T1.text_color - T2.text_color| <= TUPLE_THRESHOLD.text_color
     AND |T1.text_height - T2.text_height| <= TUPLE_THRESHOLD.text_height
      Then
              RETURN True
        ELSE
               RETURN False
```

At step 310 of the method 300, the matching seed word region extraction module 208 executed by the one or more hardware processors 102 is configured by the programmed instructions to obtain a plurality of matching seed word regions based on a comparison between the plurality of seed words and a plurality of text values corresponding to each of the plurality of word level text regions based on a Levenshtein distance based matching technique. For example, for every seed word from the plurality of seed words, Levenshtein Distance (fuzzy matching) of its text with each text value is calculated. If the Levenshtein Distance is less than certain pre-defined threshold, then the text characteristics of corresponding word level text regions are captured as seed word parameters and append it to SEED_PARAMETER_LIST.

At step 312 of the method 300, the meaningful text block identification module 210 executed by the one or more hardware processors 102 is configured by the programmed instructions to identify a plurality of meaningful text blocks by merging a plurality of adjacent word level text regions.

At step 314 of the method 300, the seed block identification module 212 executed by the one or more hardware processors 102 is configured by the programmed instructions to identify a plurality of seed blocks by finding a merged word level text region overlapping with each of a corresponding plurality of matching seed word region.

The pseudocode for identifying the plurality of meaningful text blocks, the plurality of seed blocks and computing minimum count value is explained using the following pseudocode 2.

### Pseudocode 2:

a) As text regions are identified in word level, merge the adjacent text regions to form meaningful text blocks say MERGED_REGION_LIST.
b) Find the merged text region which overlaps with seed words and store it in SEED_BLOCK_LIST.
c) For each SEED_BLOCK in SEED_BLOCK_LIST
   (i) Generate a square matrix A (third matrix) from pairwise comparison of text regions characteristics in SEED_BLOCK using Text Characteristics Comparison Utility
   (ii) Count the number of distinct rows in matrix A and append it in MIN_COUNT_BLOCK_LIST. This value will be the number of distinct text characteristics in SEED_BLOCK.
d) Take minimum of MIN_COUNT_BLOCK_LIST, name it as MIN_COUNTS.

At step 316 of the method 300, the product name identification module 214 executed by the one or more hardware processors 102 is configured by the programmed instructions to identify a plurality of product names based on the plurality of meaningful text blocks, the plurality of seed blocks and a plurality of seed parameters associated with the plurality of seed words using a matrix based product name detection technique, wherein the plurality of product names are updated in the product dictionary. The plurality of seed parameters comprises a text pixel density, a foreground text color, and a height of the text region associated with each of a plurality of seed words.

The steps for identifying the plurality of product names based on the plurality of meaningful text blocks, the plurality of seed blocks and the plurality of seed parameters associated with the plurality of seed words using the matrix based product name detection technique explained as follows. Initially, a first matrix is generated for each of the plurality of meaningful text blocks based on a pairwise comparison between the plurality of text characteristics associated with each element of the merged text region using the text characteristics comparison utility. After generating the first matrix, a merged region distinct row count value is computed by counting a number of distinct rows associated with the first matrix corresponding to each of the plurality of meaningful text blocks. Further, a second matrix is generated for each element of the merged text region associated with each of the plurality of meaningful text blocks based on a comparison between the plurality of text characteristics associated with each element of the merged text region and the plurality of seed parameters associated with the plurality of seed words using a text characteristics comparison utility. After generating the second matrix, a plurality of probable product names are obtained by identifying a plurality of elements associated with the merged text region having non zero value in the second matrix. Finally, a plurality of product names are identified from the plurality of probable product names corresponding to each of the plurality of meaningful text blocks if the corresponding text value is one of a) a noun and b) a pronoun only if the merged region distinct row count value corresponding to each of the plurality of meaningful text blocks is greater than or equal to a minimum count value.

The pseudocode for identifying the plurality of product names is explained using the following pseudocode 3:

### Pseudocode 3:

```
a) For MERGED_REGION in MERGED_REGION_LIST
                    i. Generate a square matrix A1 ( first matrix) from pairwise
                         comparison of word regions characteristics in
                        MERGED_REGION using Text Characteristics
                         Comparison Utility. Count the number of distinct rows in
                        A1, name it as MERGED_REGION_DISTINCT_COUNT.
                   ii. Generate a matrix B (the second matrix) by comparing text
                         characteristics of each element of MERGED_REGION_with
                        text characteristics of each element of
                         SEED_PARAMETER_LIST using Text Characteristics
                         Comparison Utility. B_ij element will correspond to the
                        result of comparison of ith MERGED _REGION with jth
                         SEED_PARAMATER.
                   iii. IF MERGED_REGION_DISTINCT_COUNT is greater
                        than equal to MIN_COUNTS AND any element of B
                         (second matrix) is TRUE,
                         THEN
                             FOR each word region in MERGED_REGION having
                     B entry as True
                                    IF its TEXT_VALUE (text value) is Noun OR
                            Pronoun
                                    THEN
                                       insert TEXT_VALUE in Product Name
                                Dictionary
                                       append MERGED_REGION_in
                                SELECTED_MERGED_REGION_LIST.
                     ELSE CONTINUE.
           b) OUTPUT SELECTED_MERGED_REGION_LIST as Product Name
              Block and Updated Product Name Dictionary.
```

The steps for computing the minimum count value based on the plurality of seed blocks are explained as follows: Initially, a third matrix is generated for each of the plurality of seed blocks based on a pairwise comparison of a corresponding plurality of text characteristics associated with each of the plurality of seed blocks using the text characteristics comparison utility. Further, a distinct row count list is generated based on the associated third matrix corresponding to each of the plurality of seed blocks. Finally, the minimum count value is identified by selecting a top value from a sorted distinct row count list, wherein the distinct row count list is sorted in ascending order as explained in Pseudocode 2.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of identifying product details/product names from marketing collateral images. The present disclosure identifies the product name blocks from marketing collateral using a novel matrix based product name detection technique and prepare the product name dictionary with minimal effort. Further, the present disclosure is a generic approach that can extract product name information from complex marketing collateral images. It is a non-template-based approach that doesn't expect product names in a predefined region or containing certain grammatical patterns. It can detect and extract product names irrespective of their color, style etc. Further, the present disclosure doesn't require any type of training data such as data repositories of brand names & grammatical words, feature specific training data, annotated training data etc. The present disclosure is language agnostic and can work with any marketing collateral image irrespective of its language. The present disclosure utilizes an unique approach of representative seed words as input, to identify product names in the marketing collateral image.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:
receiving (302), by one or more hardware processors, an image and a plurality of seed words associated with a marketing collateral, wherein the seed words are valid product names associated with the marketing collateral used for identifying other product names;
identifying (304), by the one or more hardware processors, a plurality of word level text regions from the image using a text region detection technique;
extracting (306), by the one or more hardware processors, a text value corresponding to each of the plurality of word level text regions using a text extraction technique;
extracting (308), by one or more hardware processors, a plurality of text characteristics corresponding to each of the plurality of word level text regions using a text characteristics extraction technique, wherein the plurality of text characteristics comprises a text pixel density, a foreground text color, and a height of the text region and wherein the text characteristics of two word level text regions are analyzed taking into account a tolerance level, wherein the tolerance level includes threshold values for comparing the text pixel density, the foreground text color, and the height of the text region;
obtaining (310), by the one or more hardware processors, a plurality of matching seed word regions based on a comparison between the plurality of seed words and a plurality of text values corresponding to each of the plurality of word level text regions based on a Levenshtein distance based matching technique, wherein when the Levenshtein distance is less than a pre-defined threshold, the text characteristics of corresponding word level text regions are captured as seed parameters;
identifying (312), by the one or more hardware processors, a plurality of meaningful text blocks by merging a plurality of adjacent word level text regions;
identifying (314), by the one or more hardware processors, a plurality of seed blocks by finding a merged word level text region overlapping with each of a corresponding plurality of matching seed word region; and
identifying (316), by the one or more hardware processors, a plurality of product names based on the plurality of meaningful text blocks, the plurality of seed blocks and the plurality of seed parameters associated with the plurality of seed words using a matrix based product name detection technique, wherein the plurality of product names are updated in the product dictionary, wherein the product name detection technique comprises:
generating a first matrix for each of the plurality of meaningful text blocks based on a pairwise comparison between the plurality of text characteristics associated with each element of the merged text region using the text characteristics comparison utility;
computing a merged region distinct row count value by counting a number of distinct rows associated with the first matrix corresponding to each of the plurality of meaningful text blocks;
generating a second matrix for each element of the merged text region associated with each of the plurality of meaningful text blocks based on a comparison between the plurality of text characteristics associated with each element of the merged text region and the plurality of seed parameters associated with the plurality of seed words using a text characteristics comparison utility;
obtaining a plurality of probable product names by identifying a plurality of elements associated with the merged text region having non-zero value in the second matrix; and
identifying a plurality of product names from the plurality of probable product names corresponding to each of the plurality of meaningful text blocks if the corresponding text value is one of a) a noun and b) a pronoun only if the merged region distinct row count value corresponding to each of the plurality of meaningful text blocks is greater than or equal to a minimum count value.

2. The method as claimed in claim 1, wherein the plurality of seed parameters comprises a text pixel density, a foreground text color, and a height of the text region.

3. The method as claimed in claim 1, wherein the steps for extracting the plurality of text characteristics from the marketing collateral based on the plurality of word level text regions using the text characteristics extraction technique comprises:
converting each of the plurality of word level text regions into a two-colour converted text regions using a two-colour conversion utility function;
obtaining a plurality of text regions by removing white pixel noise from the two-colour converted text regions using an image processing technique;
obtaining a white pixel mask corresponding to each of the plurality of text regions using image processing tools, wherein the text region comprises a foreground text;
identifying a dominant color value for each of the plurality of text regions by converting the each of the plurality of text regions into LAB color space and masking an L component with the white pixel mask;
estimating a text pixel density associated with each of the plurality of text regions based on the white pixel mask, wherein the text pixel density is the quotient obtained by dividing number of white pixels by total size of the text region and, wherein the total size of the text region is equal to total number of pixels in the text region;
computing a height associated with each of the plurality of text regions based on a height of the white pixel mask associated with each of the plurality of text regions, wherein the height associated with each of the plurality of text regions corresponds to the maximum height of the foreground text; and
obtaining the plurality of text characteristics corresponding to each of the plurality of word level text regions by generating a tuple comprising the text pixel density, the foreground text color, and the height of the text region.

4. The method as claimed in claim 1, wherein the steps for computing the minimum count value based on the plurality of seed blocks comprises:
generating a third matrix for each of the plurality of seed blocks based on a pairwise comparison of a corresponding plurality of text characteristics associated with each of the plurality of seed blocks using the text characteristics comparison utility;
generating a distinct row count list based on the associated third matrix corresponding to each of the plurality of seed blocks; and
identifying the minimum count value by selecting a top value from a sorted distinct row count list, wherein the distinct row count list is sorted in ascending order.

5. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive an image and a plurality of seed words associated with a marketing collateral, wherein the seed words are valid product names associated with the marketing collateral used for identifying other product names;
identify a plurality of word level text regions from the image using a text region detection technique;
extract a text value corresponding to each of the plurality of word level text regions using a text extraction technique;
extract a plurality of text characteristics corresponding to each of the plurality of word level text regions using a text characteristics extraction technique, wherein the plurality of text characteristics comprises a text pixel density, a foreground text color, and a height of the text region and wherein the text characteristics of two word level text regions are analyzed taking into account a tolerance level, wherein the tolerance level includes threshold values for comparing the text pixel density, the foreground text color, and the height of the text region;
obtain a plurality of matching seed word regions based on a comparison between the plurality of seed words and a plurality of text values corresponding to each of the plurality of word level text regions based on a Levenshtein distance based matching technique, wherein when the Levenshtein distance is less than a pre-defined threshold, the text characteristics of corresponding word level text regions are captured as seed parameters;
identify a plurality of meaningful text blocks by merging a plurality of adjacent word level text regions;
identify a plurality of seed blocks by finding a merged word level text region overlapping with each of a corresponding plurality of matching seed word region; and
identify a plurality of product names based on the plurality of meaningful text blocks, the plurality of seed blocks and a plurality of seed parameters associated with the plurality of seed words using a matrix based product name detection technique, wherein the plurality of product names are updated in the product dictionary, wherein the product name detection technique comprises:
generating a first matrix for each of the plurality of meaningful text blocks based on a pairwise comparison between the plurality of text characteristics associated with each element of the merged text region using the text characteristics comparison utility;
computing a merged region distinct row count value by counting a number of distinct rows associated with the first matrix corresponding to each of the plurality of meaningful text blocks;
generating a second matrix for each element of the merged text region associated with each of the plurality of meaningful text blocks based on a comparison between the plurality of text characteristics associated with each element of the merged text region and the plurality of seed parameters associated with the plurality of seed words using a text characteristics comparison utility;
obtaining a plurality of probable product names by identifying a plurality of elements associated with the merged text region having non-zero value in the second matrix; and
identifying a plurality of product names from the plurality of probable product names corresponding to each of the plurality of meaningful text blocks if the corresponding text value is one of a) a noun and b) a pronoun only if the merged region distinct row count value corresponding to each of the plurality of meaningful text blocks is greater than or equal to a minimum count value.

6. The system of claim 5, wherein the plurality of seed parameters comprises a text pixel density, a foreground text color, and a height of the text region.

7. The system of claim 5, wherein the steps for extracting the plurality of text characteristics from the marketing collateral based on the plurality of word level text regions using the text characteristics extraction technique comprises:
converting each of the plurality of word level text regions into a two-colour converted text regions using a two-colour conversion utility function;
obtaining a plurality of text regions by removing white pixel noise from the two-colour converted text regions using an image processing technique;
obtaining a white pixel mask corresponding to each of the plurality of text regions using image processing tools, wherein the text region comprises a foreground text;
identifying a dominant color value for each of the plurality of text regions by converting the each of the plurality of text regions into LAB color space and masking an L component with the white pixel mask;
estimating a text pixel density associated with each of the plurality of text regions based on the white pixel mask, wherein the text pixel density is the quotient obtained by dividing number of white pixels by total size of the text region and, wherein the total size of the text region is equal to total number of pixels in the text region;
computing a height associated with each of the plurality of text regions based on a height of the white pixel mask associated with each of the plurality of text regions, wherein the height associated with each of the plurality of text regions corresponds to the maximum height of the foreground text; and
obtaining the plurality of text characteristics corresponding to each of the plurality of word level text regions by generating a tuple comprising the text pixel density, the foreground text color, and the height of the text region.

8. The system of claim 5, wherein the steps for computing the minimum count value based on the plurality of seed blocks comprises:
generating a third matrix for each of the plurality of seed blocks based on a pairwise comparison of a corresponding plurality of text characteristics associated with each of the plurality of seed blocks using the text characteristics comparison utility;
generating a distinct row count list based on the associated third matrix corresponding to each of the plurality of seed blocks; and
identifying the minimum count value by selecting a top value from a sorted distinct row count list, wherein the distinct row count list is sorted in ascending order.

9. One or more non-transitory machine-readable information storage mediums comprising one or more instructions which when executed by one or more hardware processors cause:
receiving an image and a plurality of seed words associated with a marketing collateral, wherein the seed words are valid product names associated with the marketing collateral used for identifying other product names;
identifying a plurality of word level text regions from the image using a text region detection technique;
extracting a text value corresponding to each of the plurality of word level text regions using a text extraction technique, wherein the plurality of text characteristics comprises a text pixel density, a foreground text color, and a height of the text region and wherein the text characteristics of two word level text regions are analyzed taking into account a tolerance level, wherein the tolerance level includes threshold values for comparing the text pixel density, the foreground text color, and the height of the text region;
extracting a plurality of text characteristics corresponding to each of the plurality of word level text regions using a text characteristics extraction technique;
obtaining a plurality of matching seed word regions based on a comparison between the plurality of seed words and a plurality of text values corresponding to each of the plurality of word level text regions based on a Levenshtein distance based matching technique, wherein when the Levenshtein distance is less than a pre-defined threshold, the text characteristics of corresponding word level text regions are captured as seed parameters;
identifying a plurality of meaningful text blocks by merging a plurality of adjacent word level text regions;
identifying a plurality of seed blocks by finding a merged word level text region overlapping with each of a corresponding plurality of matching seed word region; and
identifying a plurality of product names based on the plurality of meaningful text blocks, the plurality of seed blocks and a plurality of seed parameters associated with the plurality of seed words using a matrix based product name detection technique, wherein the plurality of product names are updated in the product dictionary, wherein the product name detection technique comprises:
generating a first matrix for each of the plurality of meaningful text blocks based on a pairwise comparison between the plurality of text characteristics associated with each element of the merged text region using the text characteristics comparison utility;
computing a merged region distinct row count value by counting a number of distinct rows associated with the first matrix corresponding to each of the plurality of meaningful text blocks;
generating a second matrix for each element of the merged text region associated with each of the plurality of meaningful text blocks based on a comparison between the plurality of text characteristics associated with each element of the merged text region and the plurality of seed parameters associated with the plurality of seed words using a text characteristics comparison utility;
obtaining a plurality of probable product names by identifying a plurality of elements associated with the merged text region having non-zero value in the second matrix; and
identifying a plurality of product names from the plurality of probable product names corresponding to each of the plurality of meaningful text blocks if the corresponding text value is one of a) a noun and b) a pronoun only if the merged region distinct row count value corresponding to each of the plurality of meaningful text blocks is greater than or equal to a minimum count value.

## Patentansprüche

1. Prozessorimplementiertes Verfahren (300), wobei das Verfahren umfasst:
Empfangen (302), durch einen oder mehrere Hardwareprozessoren, eines Bildes und einer Mehrzahl von Startwörtern, die mit einem Marketing-Kollateral assoziiert sind, wobei die Startwörter gültige Produktnamen sind, die mit dem Marketing-Kollateral assoziiert sind, die zum Identifizieren anderer Produktnamen verwendet wird;
Identifizieren (304), durch den einen oder die mehreren Hardwareprozessoren, einer Mehrzahl von Textbereichen auf Wortebene aus dem Bild unter Verwendung einer Textbereichsdetektionstechnik;
Extrahieren (306), durch den einen oder die mehreren Hardwareprozessoren, eines Textwerts, der jedem der Mehrzahl von Textbereichen auf Wortebene entspricht, unter Verwendung einer Textextraktionstechnik;
Extrahieren (308), durch einen oder mehrere Hardwareprozessoren, einer Mehrzahl von Textmerkmalen, die jedem der Mehrzahl von Textbereichen auf Wortebene entsprechen, unter Verwendung einer Textmerkmalsextraktionstechnik, wobei die Mehrzahl von Textmerkmalen eine Textpixeldichte, eine Vordergrundtextfarbe und eine Höhe des Textbereichs umfasst und wobei die Textmerkmale von zwei Textbereichen auf Wortebene unter Berücksichtigung eines Toleranzniveaus analysiert werden, wobei das Toleranzniveau Schwellenwerte zum Vergleichen der Textpixeldichte, der Vordergrundtextfarbe und der Höhe des Textbereichs beinhaltet;
Erhalten (310), durch den einen oder die mehreren Hardwareprozessoren, einer Mehrzahl von übereinstimmenden Startwortbereichen basierend auf einem Vergleich zwischen der Mehrzahl von Startwörtern und einer Mehrzahl von Textwerten, die jedem der Mehrzahl von Textbereichen auf Wortebene entsprechen, basierend auf einer auf einem Levenshtein-Abstand basierenden Übereinstimmungstechnik, wobei, wenn der Levenshtein-Abstand kleiner als ein vordefinierter Schwellenwert ist, die Textmerkmale von entsprechenden Textbereichen auf Wortebene als Startparameter erfasst werden;
Identifizieren (312), durch den einen oder die mehreren Hardwareprozessoren, einer Mehrzahl von sinnvollen Textblöcken durch Zusammenführen einer Mehrzahl von benachbarten Textbereichen auf Wortebene;
Identifizieren (314), durch den einen oder die mehreren Hardwareprozessoren, einer Mehrzahl von Startblöcken durch Finden eines zusammengeführten Textbereichs auf Wortebene, der sich mit jedem einer entsprechenden Mehrzahl von übereinstimmenden Startwortbereichen überlappt; und
Identifizieren (316), durch den einen oder die mehreren Hardwareprozessoren, einer Mehrzahl von Produktnamen basierend auf der Mehrzahl von sinnvollen Textblöcken, der Mehrzahl von Startblöcken und der Mehrzahl von Startparametern, die der Mehrzahl von Startwörtern zugeordnet sind, unter Verwendung einer matrixbasierten Produktnamendetektionstechnik, wobei die Mehrzahl von Produktnamen in dem Produktwörterbuch aktualisiert wird, wobei die Produktnamendetektionstechnik umfasst:
Erzeugen einer ersten Matrix für jeden der Mehrzahl von sinnvollen Textblöcken basierend auf einem paarweisen Vergleich zwischen der Mehrzahl von Textmerkmalen, die jedem Element des zusammengeführten Textbereichs zugeordnet sind, unter Verwendung des Textmerkmalsvergleichsdienstprogramms;
Berechnen eines eindeutigen Reihenzählwerts des zusammengeführten Bereichs durch Zählen einer Anzahl von eindeutigen Reihen, die der ersten Matrix zugeordnet sind, die jedem der Mehrzahl von sinnvollen Textblöcken entspricht;
Erzeugen einer zweiten Matrix für jedes Element des zusammengeführten Textbereichs, das jedem der Mehrzahl von sinnvollen Textblöcken zugeordnet ist, basierend auf einem Vergleich zwischen der Mehrzahl von Textmerkmalen, die jedem Element des zusammengeführten Textbereichs zugeordnet sind, und der Mehrzahl von Startparametern, die der Mehrzahl von Startwörtern zugeordnet sind, unter Verwendung eines Textmerkmalsvergleichsdienstprogramms;
Erhalten einer Mehrzahl von wahrscheinlichen Produktnamen durch Identifizieren einer Mehrzahl von Elementen, die dem zusammengeführten Textbereich zugeordnet sind, der einen Nicht-Null-Wert in der zweiten Matrix aufweist; und
Identifizieren einer Mehrzahl von Produktnamen aus der Mehrzahl von wahrscheinlichen Produktnamen, die jedem der Mehrzahl von sinnvollen Textblöcken entsprechen, wenn der entsprechende Textwert einer von a) einem Nomen und b) einem Pronomen ist, nur wenn der eindeutige Reihenzählwert des zusammengeführten Bereichs, der jedem der Mehrzahl von sinnvollen Textblöcken entspricht, größer als oder gleich einem minimalen Zählwert ist.

2. Verfahren nach Anspruch 1, wobei die Mehrzahl von Startparametern eine Textpixeldichte, eine Vordergrundtextfarbe und eine Höhe des Textbereichs umfasst.

3. Verfahren nach Anspruch 1, wobei die Schritte zum Extrahieren der Mehrzahl von Textmerkmalen aus dem Marketing-Kollateral basierend auf der Mehrzahl von Textbereichen auf Wortebene unter Verwendung der Textmerkmalsextraktionstechnik Folgendes umfassen:
Umwandeln jedes der Mehrzahl von Textbereichen auf Wortebene in zweifarbig umgewandelte Textbereiche unter Verwendung einer Zweifarbumwandlungsdienstprogrammfunktion;
Erhalten einer Mehrzahl von Textbereichen durch Entfernen von Weißpixelrauschen aus den zweifarbig umgewandelten Textbereichen unter Verwendung einer Bildverarbeitungstechnik;
Erhalten einer Weißpixelmaske, die jedem der Mehrzahl von Textbereichen entspricht, unter Verwendung von Bildverarbeitungswerkzeugen, wobei der Textbereich einen Vordergrundtext umfasst;
Identifizieren eines dominanten Farbwerts für jeden der Mehrzahl von Textbereichen durch Umwandeln jedes der Mehrzahl von Textbereichen in einen LAB-Farbraum und Maskieren einer *L*-Komponente mit der Weißpixelmaske;
Schätzen einer Textpixeldichte, die jedem der Mehrzahl von Textbereichen zugeordnet ist, basierend auf der Weißpixelmaske, wobei die Textpixeldichte der Quotient ist, der durch Dividieren der Anzahl von weißen Pixeln durch die Gesamtgröße des Textbereichs erhalten wird, und wobei die Gesamtgröße des Textbereichs gleich der Gesamtanzahl von Pixeln in dem Textbereich ist;
Berechnen einer Höhe, die jedem der Mehrzahl von Textbereichen zugeordnet ist, basierend auf einer Höhe der Weißpixelmaske, die jedem der Mehrzahl von Textbereichen zugeordnet ist, wobei die Höhe, die jedem der Mehrzahl von Textbereichen zugeordnet ist, der maximalen Höhe des Vordergrundtexts entspricht; und
Erhalten der Mehrzahl von Textmerkmalen, die jedem der Mehrzahl von Textbereichen auf Wortebene entsprechen, durch Erzeugen eines Tupels, das die Textpixeldichte, die Vordergrundtextfarbe und die Höhe des Textbereichs umfasst.

4. Verfahren nach Anspruch 1, wobei die Schritte zum Berechnen des minimalen Zählwerts basierend auf der Mehrzahl von Startblöcken Folgendes umfassen:
Erzeugen einer dritten Matrix für jeden der Mehrzahl von Startblöcken basierend auf einem paarweisen Vergleich einer entsprechenden Mehrzahl von Textmerkmalen, die jedem der Mehrzahl von Startblöcken zugeordnet sind, unter Verwendung des Textmerkmalsvergleichsdienstprogramms;
Erzeugen einer eindeutigen Reihenzählliste basierend auf der zugeordneten dritten Matrix, die jedem der Mehrzahl von Startblöcken entspricht; und
Identifizieren des minimalen Zählwerts durch Auswählen eines obersten Werts aus einer sortierten eindeutigen Reihenzählliste, wobei die eindeutige Reihenzählliste in aufsteigender Reihenfolge sortiert ist.

5. System (100), umfassend:
mindestens einen Speicher (104), der programmierte Anweisungen speichert; eine oder mehrere Eingabe/Ausgabe(E/A)-Schnittstellen (112); und einen oder mehrere Hardwareprozessoren (102), die betriebsfähig mit dem mindestens einen Speicher (104) gekoppelt sind, wobei der eine oder die mehreren Hardwareprozessoren (102) durch die programmierten Anweisungen konfiguriert sind zum:
Empfangen eines Bildes und einer Mehrzahl von Startwörtern, die mit einem Marketing-Kollateral assoziiert sind, wobei die Startwörter gültige Produktnamen sind, die mit dem Marketing-Kollateral assoziiert sind, die zum Identifizieren anderer Produktnamen verwendet wird;
Identifizieren einer Mehrzahl von Textbereichen auf Wortebene aus dem Bild unter Verwendung einer Textbereichsdetektionstechnik;
Extrahieren eines Textwerts, der jedem der Mehrzahl von Textbereichen auf Wortebene entspricht, unter Verwendung einer Textextraktionstechnik;
Extrahieren einer Mehrzahl von Textmerkmalen, die jedem der Mehrzahl von Textbereichen auf Wortebene entsprechen, unter Verwendung einer Textmerkmalsextraktionstechnik, wobei die Mehrzahl von Textmerkmalen eine Textpixeldichte, eine Vordergrundtextfarbe und eine Höhe des Textbereichs umfasst und wobei die Textmerkmale von zwei Textbereichen auf Wortebene unter Berücksichtigung eines Toleranzniveaus analysiert werden, wobei das Toleranzniveau Schwellenwerte zum Vergleichen der Textpixeldichte, der Vordergrundtextfarbe und der Höhe des Textbereichs beinhaltet;
Erhalten einer Mehrzahl von übereinstimmenden Startwortbereichen basierend auf einem Vergleich zwischen der Mehrzahl von Startwörtern und einer Mehrzahl von Textwerten, die jedem der Mehrzahl von Textbereichen auf Wortebene entsprechen, basierend auf einer auf einem Levenshtein-Abstand basierenden Übereinstimmungstechnik, wobei, wenn der Levenshtein-Abstand kleiner als ein vordefinierter Schwellenwert ist, die Textmerkmale von entsprechenden Textbereichen auf Wortebene als Startparameter erfasst werden;
Identifizieren einer Mehrzahl von sinnvollen Textblöcken durch Zusammenführen einer Mehrzahl von benachbarten Textbereichen auf Wortebene;
Identifizieren einer Mehrzahl von Startblöcken durch Finden eines zusammengeführten Textbereichs auf Wortebene, der sich mit jedem einer entsprechenden Mehrzahl von übereinstimmenden Startwortbereichen überlappt; und
Identifizieren einer Mehrzahl von Produktnamen basierend auf der Mehrzahl von sinnvollen Textblöcken, der Mehrzahl von Startblöcken und einer Mehrzahl von Startparametern, die der Mehrzahl von Startwörtern zugeordnet sind, unter Verwendung einer matrixbasierten Produktnamendetektionstechnik, wobei die Mehrzahl von Produktnamen in dem Produktwörterbuch aktualisiert wird, wobei die Produktnamendetektionstechnik umfasst:
Erzeugen einer ersten Matrix für jeden der Mehrzahl von sinnvollen Textblöcken basierend auf einem paarweisen Vergleich zwischen der Mehrzahl von Textmerkmalen, die jedem Element des zusammengeführten Textbereichs zugeordnet sind, unter Verwendung des Textmerkmalsvergleichsdienstprogramms;
Berechnen eines eindeutigen Reihenzählwerts des zusammengeführten Bereichs durch Zählen einer Anzahl von eindeutigen Reihen, die der ersten Matrix zugeordnet sind, die jedem der Mehrzahl von sinnvollen Textblöcken entspricht;
Erzeugen einer zweiten Matrix für jedes Element des zusammengeführten Textbereichs, das jedem der Mehrzahl von sinnvollen Textblöcken zugeordnet ist, basierend auf einem Vergleich zwischen der Mehrzahl von Textmerkmalen, die jedem Element des zusammengeführten Textbereichs zugeordnet sind, und der Mehrzahl von Startparametern, die der Mehrzahl von Startwörtern zugeordnet sind, unter Verwendung eines Textmerkmalsvergleichsdienstprogramms;
Erhalten einer Mehrzahl von wahrscheinlichen Produktnamen durch Identifizieren einer Mehrzahl von Elementen, die dem zusammengeführten Textbereich zugeordnet sind, der einen Nicht-Null-Wert in der zweiten Matrix aufweist; und
Identifizieren einer Mehrzahl von Produktnamen aus der Mehrzahl von wahrscheinlichen Produktnamen, die jedem der Mehrzahl von sinnvollen Textblöcken entsprechen, wenn der entsprechende Textwert einer von a) einem Nomen und b) einem Pronomen ist, nur wenn der eindeutige Reihenzählwert des zusammengeführten Bereichs, der jedem der Mehrzahl von sinnvollen Textblöcken entspricht, größer als oder gleich einem minimalen Zählwert ist.

6. System nach Anspruch 5, wobei die Mehrzahl von Startparametern eine Textpixeldichte, eine Vordergrundtextfarbe und eine Höhe des Textbereichs umfasst.

7. System nach Anspruch 5, wobei die Schritte zum Extrahieren der Mehrzahl von Textmerkmalen aus dem Marketing-Kollateral basierend auf der Mehrzahl von Textbereichen auf Wortebene unter Verwendung der Textmerkmalsextraktionstechnik Folgendes umfassen:
Umwandeln jedes der Mehrzahl von Textbereichen auf Wortebene in zweifarbig umgewandelte Textbereiche unter Verwendung einer Zweifarbumwandlungsdienstprogrammfunktion;
Erhalten einer Mehrzahl von Textbereichen durch Entfernen von Weißpixelrauschen aus den zweifarbig umgewandelten Textbereichen unter Verwendung einer Bildverarbeitungstechnik;
Erhalten einer Weißpixelmaske, die jedem der Mehrzahl von Textbereichen entspricht, unter Verwendung von Bildverarbeitungswerkzeugen, wobei der Textbereich einen Vordergrundtext umfasst;
Identifizieren eines dominanten Farbwerts für jeden der Mehrzahl von Textbereichen durch Umwandeln jedes der Mehrzahl von Textbereichen in einen LAB-Farbraum und Maskieren einer *L*-Komponente mit der Weißpixelmaske;
Schätzen einer Textpixeldichte, die jedem der Mehrzahl von Textbereichen zugeordnet ist, basierend auf der Weißpixelmaske, wobei die Textpixeldichte der Quotient ist, der durch Dividieren der Anzahl von weißen Pixeln durch die Gesamtgröße des Textbereichs erhalten wird, und wobei die Gesamtgröße des Textbereichs gleich der Gesamtanzahl von Pixeln in dem Textbereich ist;
Berechnen einer Höhe, die jedem der Mehrzahl von Textbereichen zugeordnet ist, basierend auf einer Höhe der Weißpixelmaske, die jedem der Mehrzahl von Textbereichen zugeordnet ist, wobei die Höhe, die jedem der Mehrzahl von Textbereichen zugeordnet ist, der maximalen Höhe des Vordergrundtexts entspricht; und
Erhalten der Mehrzahl von Textmerkmalen, die jedem der Mehrzahl von Textbereichen auf Wortebene entsprechen, durch Erzeugen eines Tupels, das die Textpixeldichte, die Vordergrundtextfarbe und die Höhe des Textbereichs umfasst.

8. System nach Anspruch 5, wobei die Schritte zum Berechnen des minimalen Zählwerts basierend auf der Mehrzahl von Startblöcken Folgendes umfassen:
Erzeugen einer dritten Matrix für jeden der Mehrzahl von Startblöcken basierend auf einem paarweisen Vergleich einer entsprechenden Mehrzahl von Textmerkmalen, die jedem der Mehrzahl von Startblöcken zugeordnet sind, unter Verwendung des Textmerkmalsvergleichsdienstprogramms;
Erzeugen einer eindeutigen Reihenzählliste basierend auf der zugeordneten dritten Matrix, die jedem der Mehrzahl von Startblöcken entspricht; und
Identifizieren des minimalen Zählwerts durch Auswählen eines obersten Werts aus einer sortierten eindeutigen Reihenzählliste, wobei die eindeutige Reihenzählliste in aufsteigender Reihenfolge sortiert ist.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen eines Bildes und einer Mehrzahl von Startwörtern, die mit einem Marketing-Kollateral assoziiert sind, wobei die Startwörter gültige Produktnamen sind, die mit dem Marketing-Kollateral assoziiert sind, die zum Identifizieren anderer Produktnamen verwendet wird;
Identifizieren einer Mehrzahl von Textbereichen auf Wortebene aus dem Bild unter Verwendung einer Textbereichsdetektionstechnik;
Extrahieren eines Textwerts, der jedem der Mehrzahl von Textbereichen auf Wortebene entspricht, unter Verwendung einer Textextraktionstechnik, wobei die Mehrzahl von Textmerkmalen eine Textpixeldichte, eine Vordergrundtextfarbe und eine Höhe des Textbereichs umfasst und wobei die Textmerkmale von zwei Textbereichen auf Wortebene unter Berücksichtigung eines Toleranzniveaus analysiert werden, wobei das Toleranzniveau Schwellenwerte zum Vergleichen der Textpixeldichte, der Vordergrundtextfarbe und der Höhe des Textbereichs beinhaltet;
Extrahieren einer Mehrzahl von Textmerkmalen, die jedem der Mehrzahl von Textbereichen auf Wortebene entsprechen, unter Verwendung einer Textmerkmalsextraktionstechnik;
Erhalten einer Mehrzahl von übereinstimmenden Startwortbereichen basierend auf einem Vergleich zwischen der Mehrzahl von Startwörtern und einer Mehrzahl von Textwerten, die jedem der Mehrzahl von Textbereichen auf Wortebene entsprechen, basierend auf einer auf einem Levenshtein-Abstand basierenden Übereinstimmungstechnik, wobei, wenn der Levenshtein-Abstand kleiner als ein vordefinierter Schwellenwert ist, die Textmerkmale von entsprechenden Textbereichen auf Wortebene als Startparameter erfasst werden;
Identifizieren einer Mehrzahl von sinnvollen Textblöcken durch Zusammenführen einer Mehrzahl von benachbarten Textbereichen auf Wortebene;
Identifizieren einer Mehrzahl von Startblöcken durch Finden eines zusammengeführten Textbereichs auf Wortebene, der sich mit jedem einer entsprechenden Mehrzahl von übereinstimmenden Startwortbereichen überlappt; und
Identifizieren einer Mehrzahl von Produktnamen basierend auf der Mehrzahl von sinnvollen Textblöcken, der Mehrzahl von Startblöcken und einer Mehrzahl von Startparametern, die der Mehrzahl von Startwörtern zugeordnet sind, unter Verwendung einer matrixbasierten Produktnamendetektionstechnik, wobei die Mehrzahl von Produktnamen in dem Produktwörterbuch aktualisiert wird, wobei die Produktnamendetektionstechnik umfasst:
Erzeugen einer ersten Matrix für jeden der Mehrzahl von sinnvollen Textblöcken basierend auf einem paarweisen Vergleich zwischen der Mehrzahl von Textmerkmalen, die jedem Element des zusammengeführten Textbereichs zugeordnet sind, unter Verwendung des Textmerkmalsvergleichsdienstprogramms;
Berechnen eines eindeutigen Reihenzählwerts des zusammengeführten Bereichs durch Zählen einer Anzahl von eindeutigen Reihen, die der ersten Matrix zugeordnet sind, die jedem der Mehrzahl von sinnvollen Textblöcken entspricht;
Erzeugen einer zweiten Matrix für jedes Element des zusammengeführten Textbereichs, das jedem der Mehrzahl von sinnvollen Textblöcken zugeordnet ist, basierend auf einem Vergleich zwischen der Mehrzahl von Textmerkmalen, die jedem Element des zusammengeführten Textbereichs zugeordnet sind, und der Mehrzahl von Startparametern, die der Mehrzahl von Startwörtern zugeordnet sind, unter Verwendung eines Textmerkmalsvergleichsdienstprogramms;
Erhalten einer Mehrzahl von wahrscheinlichen Produktnamen durch Identifizieren einer Mehrzahl von Elementen, die dem zusammengeführten Textbereich zugeordnet sind, der einen Nicht-Null-Wert in der zweiten Matrix aufweist; und
Identifizieren einer Mehrzahl von Produktnamen aus der Mehrzahl von wahrscheinlichen Produktnamen, die jedem der Mehrzahl von sinnvollen Textblöcken entsprechen, wenn der entsprechende Textwert einer von a) einem Nomen und b) einem Pronomen ist, nur wenn der eindeutige Reihenzählwert des zusammengeführten Bereichs, der jedem der Mehrzahl von sinnvollen Textblöcken entspricht, größer als oder gleich einem minimalen Zählwert ist.

## Revendications

1. Procédé mis en œuvre par processeur (300), le procédé comprenant :
la réception (302), par un ou plusieurs processeurs matériels, d'une image et d'une pluralité de mots d'amorçage associés à un support marketing, dans lequel les mots d'amorçage sont des noms de produits valides associés au support marketing utilisé pour identifier d'autres noms de produits ;
l'identification (304), par les un ou plusieurs processeurs matériels, d'une pluralité de régions de texte de niveau de mot à partir de l'image en utilisant une technique de détection de région de texte ;
l'extraction (306), par les un ou plusieurs processeurs matériels, d'une valeur de texte correspondant à chacune de la pluralité de régions de texte de niveau de mot en utilisant une technique d'extraction de texte ;
l'extraction (308), par un ou plusieurs processeurs matériels, d'une pluralité de caractéristiques de texte correspondant à chacune de la pluralité de régions de texte de niveau de mot en utilisant une technique d'extraction de caractéristiques de texte, dans lequel la pluralité de caractéristiques de texte comprend une densité de pixels de texte, une couleur de texte de premier plan, et une hauteur de la région de texte et dans lequel les caractéristiques de texte de deux régions de texte de niveau de mot sont analysées en tenant compte d'un niveau de tolérance, dans lequel le niveau de tolérance inclut des valeurs de seuil pour comparer la densité de pixels de texte, la couleur de texte de premier plan, et la hauteur de la région de texte ;
l'obtention (310), par les un ou plusieurs processeurs matériels, d'une pluralité de régions de mots d'amorçage correspondantes sur la base d'une comparaison entre la pluralité de mots d'amorçage et une pluralité de valeurs de texte correspondant à chacune de la pluralité de régions de texte de niveau de mot sur la base d'une technique de correspondance basée sur une distance de Levenshtein, dans lequel lorsque la distance de Levenshtein est inférieure à un seuil prédéfini, les caractéristiques de texte de régions de texte de niveau de mot correspondantes sont capturées en tant que paramètres d'amorçage ;
l'identification (312), par les un ou plusieurs processeurs matériels, d'une pluralité de blocs de texte significatifs en fusionnant une pluralité de régions de texte de niveau de mot adjacentes ;
l'identification (314), par les un ou plusieurs processeurs matériels, d'une pluralité de blocs d'amorçage en trouvant une région de texte de niveau de mot fusionnée chevauchant chacune d'une pluralité correspondante de régions de mots d'amorçage correspondantes ; et
l'identification (316), par les un ou plusieurs processeurs matériels, d'une pluralité de noms de produit sur la base de la pluralité de blocs de texte significatifs, de la pluralité de blocs d'amorçage et de la pluralité de paramètres d'amorçage associés à la pluralité de mots d'amorçage en utilisant une technique de détection de nom de produit basée sur une matrice, dans lequel la pluralité de noms de produit sont mis à jour dans le dictionnaire de produit, dans lequel la technique de détection de nom de produit comprend :
la génération d'une première matrice pour chacun de la pluralité de blocs de texte significatifs sur la base d'une comparaison par paires entre la pluralité de caractéristiques de texte associées à chaque élément de la région de texte fusionnée en utilisant l'outil de comparaison des caractéristiques de texte ;
le calcul d'une nombre de lignes distinctes de région fusionnée en comptant un nombre de lignes distinctes associées à la première matrice correspondant à chacun de la pluralité de blocs de texte significatifs ;
la génération d'une seconde matrice pour chaque élément de la région de texte fusionnée associée à chacun de la pluralité de blocs de texte significatifs sur la base d'une comparaison entre la pluralité de caractéristiques de texte associées à chaque élément de la région de texte fusionnée et la pluralité de paramètres d'amorçage associés à la pluralité de mots d'amorçage en utilisant une outil de comparaison des caractéristiques de texte ;
l'obtention d'une pluralité de noms de produit probables en identifiant une pluralité d'éléments associés à la région de texte fusionnée ayant une valeur non nulle dans la seconde matrice ; et
l'identification d'une pluralité de noms de produit à partir de la pluralité de noms de produit probables correspondant à chacun de la pluralité de blocs de texte significatifs si la valeur de texte correspondante est l'un parmi a) un nom et b) un pronom uniquement si la nombre de lignes distinctes de région fusionnée correspondant à chacun de la pluralité de blocs de texte significatifs est supérieure ou égale à une valeur de comptage minimale.

2. Procédé selon la revendication 1, dans lequel la pluralité de paramètres d'amorçage comprend une densité de pixels de texte, une couleur de texte de premier plan, et une hauteur de la région de texte.

3. Procédé selon la revendication 1, dans lequel les étapes d'extraction de la pluralité de caractéristiques de texte à partir du support marketing sur la base de la pluralité de régions de texte de niveau de mot en utilisant la technique d'extraction de caractéristiques de texte comprennent :
la conversion de chacune de la pluralité de régions de texte de niveau de mot en des régions de texte converties en deux couleurs en utilisant une fonction utilitaire de conversion en deux couleurs ;
l'obtention d'une pluralité de régions de texte en éliminant le bruit de pixels blancs des régions de texte converties en deux couleurs en utilisant une technique de traitement d'image ;
l'obtention d'un masque de pixels blancs correspondant à chacune de la pluralité de régions de texte en utilisant des outils de traitement d'image, dans lequel la région de texte comprend un texte de premier plan ;
l'identification d'une valeur de couleur dominante pour chacune de la pluralité de régions de texte en convertissant chacune de la pluralité de régions de texte en espace de couleur LAB et en masquant une composante *L* avec le masque de pixels blancs ;
l'estimation d'une densité de pixels de texte associée à chacune de la pluralité de régions de texte sur la base du masque de pixels blancs, dans lequel la densité de pixels de texte est le quotient obtenu en divisant le nombre de pixels blancs par la taille totale de la région de texte et, dans lequel la taille totale de la région de texte est égale au nombre total de pixels dans la région de texte ;
le calcul d'une hauteur associée à chacune de la pluralité de régions de texte sur la base d'une hauteur du masque de pixels blancs associé à chacune de la pluralité de régions de texte, dans lequel la hauteur associée à chacune de la pluralité de régions de texte correspond à la hauteur maximale du texte de premier plan ; et
l'obtention de la pluralité de caractéristiques de texte correspondant à chacune de la pluralité de régions de texte de niveau de mot en générant un tuple comprenant la densité de pixels de texte, la couleur de texte de premier plan, et la hauteur de la région de texte.

4. Procédé selon la revendication 1, dans lequel les étapes de calcul de la valeur de comptage minimale sur la base de la pluralité de blocs d'amorçage comprennent :
la génération d'une troisième matrice pour chacun de la pluralité de blocs d'amorçage sur la base d'une comparaison par paires d'une pluralité correspondante de caractéristiques de texte associées à chacun de la pluralité de blocs d'amorçage en utilisant l'outil de comparaison des caractéristiques de texte ;
la génération d'une liste des nombres de lignes distinctes sur la base de la troisième matrice associée correspondant à chacun de la pluralité de blocs d'amorçage ; et
l'identification de la valeur de comptage minimale en sélectionnant une valeur supérieure à partir d'une liste des nombres de lignes distinctes triée, dans lequel la liste des nombres de lignes distinctes est triée par ordre croissant.

5. Système (100) comprenant :
au moins une mémoire (104) stockant des instructions programmées ; une ou plusieurs interfaces d'entrée/sortie (E/S) (112) ; et un ou plusieurs processeurs matériels (102) couplés de manière opérationnelle à l'au moins une mémoire (104), dans lequel les un ou plusieurs processeurs matériels (102) sont configurés par les instructions programmées pour :
recevoir une image et une pluralité de mots d'amorçage associés à un support marketing, dans lequel les mots d'amorçage sont des noms de produits valides associés au support marketing utilisé pour identifier d'autres noms de produits ;
identifier une pluralité de régions de texte de niveau de mot à partir de l'image en utilisant une technique de détection de région de texte ;
extraire une valeur de texte correspondant à chacune de la pluralité de régions de texte de niveau de mot en utilisant une technique d'extraction de texte ;
extraire une pluralité de caractéristiques de texte correspondant à chacune de la pluralité de régions de texte de niveau de mot en utilisant une technique d'extraction de caractéristiques de texte, dans lequel la pluralité de caractéristiques de texte comprend une densité de pixels de texte, une couleur de texte de premier plan, et une hauteur de la région de texte et dans lequel les caractéristiques de texte de deux régions de texte de niveau de mot sont analysées en tenant compte d'un niveau de tolérance, dans lequel le niveau de tolérance inclut des valeurs de seuil pour comparer la densité de pixels de texte, la couleur de texte de premier plan, et la hauteur de la région de texte ;
obtenir une pluralité de régions de mots d'amorçage correspondantes sur la base d'une comparaison entre la pluralité de mots d'amorçage et une pluralité de valeurs de texte correspondant à chacune de la pluralité de régions de texte de niveau de mot sur la base d'une technique de correspondance basée sur une distance de Levenshtein, dans lequel lorsque la distance de Levenshtein est inférieure à un seuil prédéfini, les caractéristiques de texte de régions de texte de niveau de mot correspondantes sont capturées en tant que paramètres d'amorçage ;
identifier une pluralité de blocs de texte significatifs en fusionnant une pluralité de régions de texte de niveau de mot adjacentes ;
identifier une pluralité de blocs d'amorçage en trouvant une région de texte de niveau de mot fusionnée chevauchant chacune d'une pluralité correspondante de régions de mots d'amorçage correspondantes ; et
identifier une pluralité de noms de produit sur la base de la pluralité de blocs de texte significatifs, de la pluralité de blocs d'amorçage et d'une pluralité de paramètres d'amorçage associés à la pluralité de mots d'amorçage en utilisant une technique de détection de nom de produit basée sur une matrice, dans lequel la pluralité de noms de produit sont mis à jour dans le dictionnaire de produit, dans lequel la technique de détection de nom de produit comprend :
la génération d'une première matrice pour chacun de la pluralité de blocs de texte significatifs sur la base d'une comparaison par paires entre la pluralité de caractéristiques de texte associées à chaque élément de la région de texte fusionnée en utilisant l'outil de comparaison des caractéristiques de texte ;
le calcul d'une nombre de lignes distinctes de région fusionnée en comptant un nombre de lignes distinctes associées à la première matrice correspondant à chacun de la pluralité de blocs de texte significatifs ;
la génération d'une seconde matrice pour chaque élément de la région de texte fusionnée associée à chacun de la pluralité de blocs de texte significatifs sur la base d'une comparaison entre la pluralité de caractéristiques de texte associées à chaque élément de la région de texte fusionnée et la pluralité de paramètres d'amorçage associés à la pluralité de mots d'amorçage en utilisant une outil de comparaison des caractéristiques de texte ;
l'obtention d'une pluralité de noms de produit probables en identifiant une pluralité d'éléments associés à la région de texte fusionnée ayant une valeur non nulle dans la seconde matrice ; et
l'identification d'une pluralité de noms de produit à partir de la pluralité de noms de produit probables correspondant à chacun de la pluralité de blocs de texte significatifs si la valeur de texte correspondante est l'un parmi a) un nom et b) un pronom uniquement si la nombre de lignes distinctes de région fusionnée correspondant à chacun de la pluralité de blocs de texte significatifs est supérieure ou égale à une valeur de comptage minimale.

6. Système selon la revendication 5, dans lequel la pluralité de paramètres d'amorçage comprend une densité de pixels de texte, une couleur de texte de premier plan, et une hauteur de la région de texte.

7. Système selon la revendication 5, dans lequel les étapes d'extraction de la pluralité de caractéristiques de texte à partir du support marketing sur la base de la pluralité de régions de texte de niveau de mot en utilisant la technique d'extraction de caractéristiques de texte comprennent :
la conversion de chacune de la pluralité de régions de texte de niveau de mot en des régions de texte converties en deux couleurs en utilisant une fonction utilitaire de conversion en deux couleurs ;
l'obtention d'une pluralité de régions de texte en éliminant le bruit de pixels blancs des régions de texte converties en deux couleurs en utilisant une technique de traitement d'image ;
l'obtention d'un masque de pixels blancs correspondant à chacune de la pluralité de régions de texte en utilisant des outils de traitement d'image, dans lequel la région de texte comprend un texte de premier plan ;
l'identification d'une valeur de couleur dominante pour chacune de la pluralité de régions de texte en convertissant chacune de la pluralité de régions de texte en espace de couleur LAB et en masquant une composante *L* avec le masque de pixels blancs ;
l'estimation d'une densité de pixels de texte associée à chacune de la pluralité de régions de texte sur la base du masque de pixels blancs, dans lequel la densité de pixels de texte est le quotient obtenu en divisant le nombre de pixels blancs par la taille totale de la région de texte et, dans lequel la taille totale de la région de texte est égale au nombre total de pixels dans la région de texte ;
le calcul d'une hauteur associée à chacune de la pluralité de régions de texte sur la base d'une hauteur du masque de pixels blancs associé à chacune de la pluralité de régions de texte, dans lequel la hauteur associée à chacune de la pluralité de régions de texte correspond à la hauteur maximale du texte de premier plan ; et
l'obtention de la pluralité de caractéristiques de texte correspondant à chacune de la pluralité de régions de texte de niveau de mot en générant un tuple comprenant la densité de pixels de texte, la couleur de texte de premier plan, et la hauteur de la région de texte.

8. Système selon la revendication 5, dans lequel les étapes de calcul de la valeur de comptage minimale sur la base de la pluralité de blocs d'amorçage comprennent :
la génération d'une troisième matrice pour chacun de la pluralité de blocs d'amorçage sur la base d'une comparaison par paires d'une pluralité correspondante de caractéristiques de texte associées à chacun de la pluralité de blocs d'amorçage en utilisant l'outil de comparaison des caractéristiques de texte ;
la génération d'une liste des nombres de lignes distinctes sur la base de la troisième matrice associée correspondant à chacun de la pluralité de blocs d'amorçage ; et
l'identification de la valeur de comptage minimale en sélectionnant une valeur supérieure à partir d'une liste des nombres de lignes distinctes triée, dans lequel la liste des nombres de lignes distinctes est triée par ordre croissant.

9. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une image et d'une pluralité de mots d'amorçage associés à un support marketing, dans lequel les mots d'amorçage sont des noms de produits valides associés au support marketing utilisé pour identifier d'autres noms de produits ;
l'identification d'une pluralité de régions de texte de niveau de mot à partir de l'image en utilisant une technique de détection de région de texte ;
l'extraction d'une valeur de texte correspondant à chacune de la pluralité de régions de texte de niveau de mot en utilisant une technique d'extraction de texte, dans lequel la pluralité de caractéristiques de texte comprend une densité de pixels de texte, une couleur de texte de premier plan, et une hauteur de la région de texte et dans lequel les caractéristiques de texte de deux régions de texte de niveau de mot sont analysées en tenant compte d'un niveau de tolérance, dans lequel le niveau de tolérance inclut des valeurs de seuil pour comparer la densité de pixels de texte, la couleur de texte de premier plan, et la hauteur de la région de texte ;
l'extraction d'une pluralité de caractéristiques de texte correspondant à chacune de la pluralité de régions de texte de niveau de mot en utilisant une technique d'extraction de caractéristiques de texte ;
l'obtention d'une pluralité de régions de mots d'amorçage correspondantes sur la base d'une comparaison entre la pluralité de mots d'amorçage et une pluralité de valeurs de texte correspondant à chacune de la pluralité de régions de texte de niveau de mot sur la base d'une technique de correspondance basée sur une distance de Levenshtein, dans lequel lorsque la distance de Levenshtein est inférieure à un seuil prédéfini, les caractéristiques de texte de régions de texte de niveau de mot correspondantes sont capturées en tant que paramètres d'amorçage ;
l'identification d'une pluralité de blocs de texte significatifs en fusionnant une pluralité de régions de texte de niveau de mot adjacentes ;
l'identification d'une pluralité de blocs d'amorçage en trouvant une région de texte de niveau de mot fusionnée chevauchant chacune d'une pluralité correspondante de régions de mots d'amorçage correspondantes ; et
l'identification d'une pluralité de noms de produit sur la base de la pluralité de blocs de texte significatifs, de la pluralité de blocs d'amorçage et d'une pluralité de paramètres d'amorçage associés à la pluralité de mots d'amorçage en utilisant une technique de détection de nom de produit basée sur une matrice, dans lequel la pluralité de noms de produit sont mis à jour dans le dictionnaire de produit, dans lequel la technique de détection de nom de produit comprend :
la génération d'une première matrice pour chacun de la pluralité de blocs de texte significatifs sur la base d'une comparaison par paires entre la pluralité de caractéristiques de texte associées à chaque élément de la région de texte fusionnée en utilisant l'outil de comparaison des caractéristiques de texte ;
le calcul d'une nombre de lignes distinctes de région fusionnée en comptant un nombre de lignes distinctes associées à la première matrice correspondant à chacun de la pluralité de blocs de texte significatifs ;
la génération d'une seconde matrice pour chaque élément de la région de texte fusionnée associée à chacun de la pluralité de blocs de texte significatifs sur la base d'une comparaison entre la pluralité de caractéristiques de texte associées à chaque élément de la région de texte fusionnée et la pluralité de paramètres d'amorçage associés à la pluralité de mots d'amorçage en utilisant une outil de comparaison des caractéristiques de texte ;
l'obtention d'une pluralité de noms de produit probables en identifiant une pluralité d'éléments associés à la région de texte fusionnée ayant une valeur non nulle dans la seconde matrice ; et
l'identification d'une pluralité de noms de produit à partir de la pluralité de noms de produit probables correspondant à chacun de la pluralité de blocs de texte significatifs si la valeur de texte correspondante est l'un parmi a) un nom et b) un pronom uniquement si la nombre de lignes distinctes de région fusionnée correspondant à chacun de la pluralité de blocs de texte significatifs est supérieure ou égale à une valeur de comptage minimale.
